# EUROPEAN PATENT APPLICATION

(11) **EP 1 419 940 A1**
(43) Date of publication of application: **19.05.2004**
(21) Application number: 03004965.4
(22) Date of filing: 10.03.2003
(51) Int. Cl.: B60R 21/20, B60R 13/02

(54) **Automobile pillar air bag device**

(30) Priority: 15.11.2002 KR 2002071295
(71) Applicant: KIA MOTORS CORPORATION, Seoul 137-938 (KR)
(72) Inventor: Ryu, Seung-Soo, Gunpo-shi 435-010, Kyunggi-do (KR)
(74) Representative: Viering, Jentschura & Partner

(57) **Abstract**

Disclosed is an automobile pillar airbag device which is provided along the roof side rail from the front pillar of an automobile chassis to protect a passenger's head from impact in the broadside collision of the automobile. The automobile pillar airbag device includes: a sensor installed in a chassis, for sensing a broadside collision; a gas supply section installed in the chassis so as to inject a gas depending on a signal from the sensor; a bag (30) received extending from a front pillar (3) of the chassis to a roof side rail (5), and expanded in a curtain shape in the downward direction of the roof side rail of the interior of the automobile by a gas supplied from the gas supply section; a pillar trim (40) provided in an inner side of the front pillar (3) and covering the bag (30) received in the front pillar; and a pillar trim deviation preventive means including a strap (50) both ends of which are respectively connected with the front pillar and the pillar trim, and a screw (54) for coupling each end of the strap to the front pillar and pillar trim, respectively.

## Description

### BACKGROUND OF THE INVENTION

### Field of the Invention

The present invention relates to an automobile pillar airbag device which is provided along the roof side rail from the front pillar of an automobile chassis to protect a passenger's head from impact in the broadside collision of the automobile.

### Description of the Related Art

Air bag is normally accommodated in a part of the chassis so as not to occupy a space but it is expanded in an automobile collision to serve as a safety device for preventing a driver and a passenger from colliding with the inner chassis or elements such as the instrument panel and thus being damaged.

In the recent years, in order to prevent a driver's and a passenger's heads from colliding with the chassis and thus being damaged, air bag device is installed and provided in a side portion of the interior of the automobile. In such an air bag device, the bag for protecting a driver's and a passenger's heads is accommodated in a space between the front pillar of the chassis and the pillar trim, and it, in a broadside collision, pushes away the lower portion of the pillar trim by a gas supplied from a gas supply section and is expanded in a curtain shape in the downward direction.

Then, since the pillar trim is fixed to the front pillar by an insertion member such as the simple hook, it frequently deviates or is separated from the pillar by an expansive force of the bag. In this case, the driver's and passenger's bodies may be damaged by the pillar trim deviating from the pillar.

Considering this circumstance, the prior arts of PCT patent publication No. WO98/19893 and US patent No. 6,402,188 disclose constructions that prevent the pillar trim from being separated from the pillar in the expansion of the bag. In other words, according to the constructions disclosed in WO98/19893 and US 6,402,188, the pillar and the pillar trim are connected by a strap to thereby prevent the pillar trim from deviating from the pillar in the expansion of the bag.

However, the prior art of WO98/19893 needs a complicated manufacturing process and a high manufacturing cost since the strap is insertion-injected so as to fix the strap to the pillar trim and a bridge for fixing the strap is formed in the pillar trim. Also, since the strap is fixed to the pillar at both positions of upper and lower sides of the pillar trim, the assembly capability is low.

In addition, the prior art of US 6,402,188 needs a high manufacturing cost since a specific structure of clip member is used to fix the strap to the pillar trim.

### SUMMARY OF THE INVENTION

Accordingly, the present invention is directed to a pillar air bag device that substantially obviates one or more problems due to limitations and disadvantages of the related art.

Therefore, it is an object of the present invention to provide a pillar air bag device with a deviation preventive construction of the pillar trim in which the manufacturing and assembly capabilities are very superior and the manufacturing cost is low.

To accomplish the above object and other advantages, there is provided an automobile pillar airbag device comprising: a sensor installed in a chassis, for sensing a broadside collision; a gas supply section installed in the chassis so as to inject a gas depending on a signal from the sensor; a bag received extending from a front pillar of the chassis to a roof side rail, and expanded in a curtain shape in the downward direction of the roof side rail of the interior of the automobile by a gas supplied from the gas supply section; a pillar trim provided in an inner side of the front pillar and covering the bag received in the front pillar; and a pillar trim deviation preventive hole including a strap both ends of which are respectively connected with the front pillar and the pillar trim, and a screw for coupling the both ends of the strap to the front pillar and pillar trim respectively.

Preferably, the strap is installed so as to connect the front pillar and an upper portion of the pillar trim. Also, the strap and the screws are connected by a connection member having a coupling hole through which the screw penetrates, and a fixing hole which an end of the strap is inserted and bound. In addition, the connection member arranged at the front pillar side of the strap is formed integrally with a fixing boss for the front pillar of the pillar trim and is coupled to a supporting piece broken and separated from the fixing boss when the bag is expanded.

It is to be understood that both the foregoing general description and the following detailed description of the present invention are exemplary and explanatory and are intended to provide further explanation of the present invention as claimed.

### BRIEF DESCRIPTION OF THE DRAWINGS

The above objects and other advantages of the present invention will become more apparent by describing in detail preferred embodiments thereof with reference to the attached drawing in which:
FIG. 1 is a schematic view of a pillar airbag device according to an embodiment of the present invention;
FIG. 2 is a schematic view showing such a status that the pillar airbag device shown in FIG. 1 is expanded;
FIG. 3 is a sectional view taken along the line III-III of FIG. 1; and
FIG. 4 is a sectional view showing such a status that the bag of FIG. 3 is expanded.

### DETAILED DESCRIPTION OF THE PREFERRED EMBODIMENTS

Now, preferred embodiments of the present invention will be described in detail with reference to the annexed drawings.

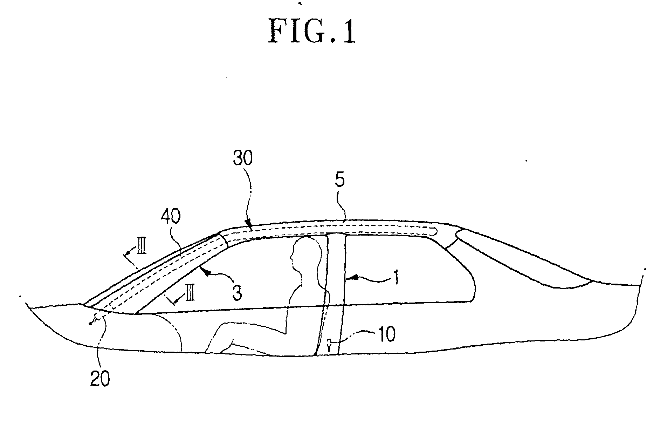

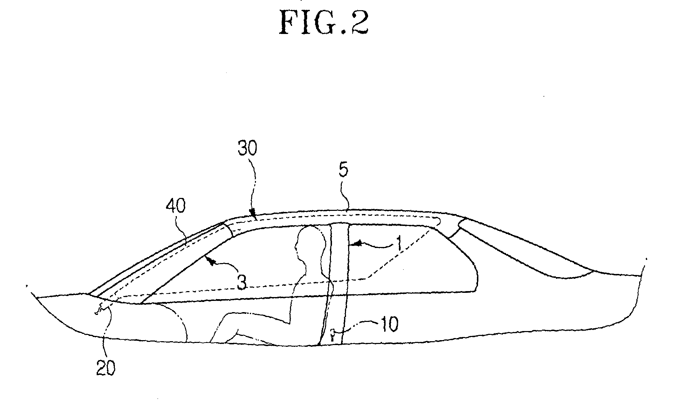

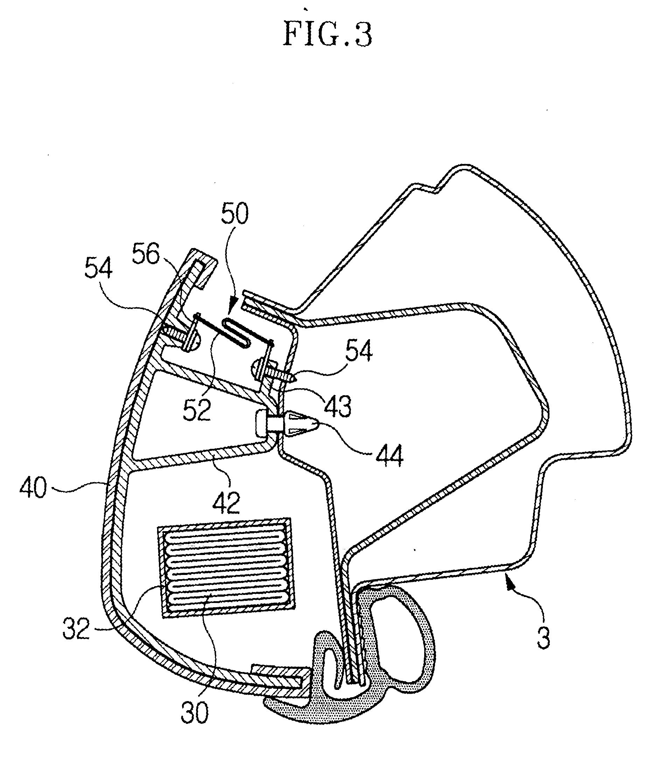

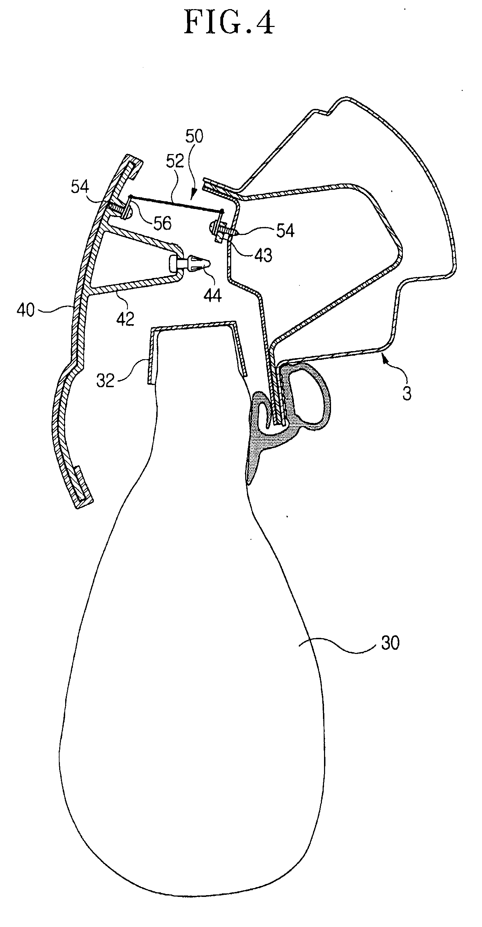

FIG. 1 is a schematic view of a pillar airbag device according to an embodiment of the present invention, FIG. 2 is a schematic view showing such a status that the pillar airbag device shown in FIG. 1 is expanded, and FIGs. 3 and 4 are sectional views showing main portions of the pillar air bag device according to the present invention.

An air bag device according to an embodiment of the present invention includes a broadside collision sensor 10, a gas supply section 20, a bag 30, a pillar trim 40 and a deviation-preventive hole 50.

Broadside collision sensor 10 is installed, for example, at the lower side of a center pillar 1, and senses a load exceeding a critical load that is applied to the side portion of the chassis. As the broadside collision sensor 10, an acceleration sensor or the like can be used.

Gas supply section 20 is installed at a mid portion of a front pillar 3, and it is connected with the broadside collision sensor 10 and operates depending on a signal inputted from the broadside collision sensor 10. As the gas supply section 20, a gas storage type storing a high pressure gas, a gas generating material type generating a gas in its operation, or the like can be used.

Bag 30 is arranged along a roof side rail 5 from the front pillar 3. This bag 30 is connected with the gas supply section 20 so as to be expanded by a gas supplied from the gas supply section 20. The bag 30 is normally accommodated in a case 32 in a folded state. While the bag 30 is expanded, a case 32 is broken by the expansive force of the bag 30 and unfolded.

Pillar trim 40 constitutes interior materials of the chassis and accommodates the gas supply section 20 and the bag 30 such that the gas supply section 20 and the bag 30 are not to be exposed to the outside. This pillar trim 40 is fixed to the pillar 3 by a fixing pin 44 fixed to a boss 42 protruded toward the pillar 3 for the contact with the pillar 3 being inserted into a fixing hole formed in the pillar 3.

Deviation-preventive hole 50 has a strap 52, a pair of screws 54, and a pair of connection members 56, and connects the pillar 3 and the pillar trim 40. Concretely, both ends of the strap are respectively bound to one sided holes of the connection members 56 each having a pair of holes and fixed thereto, and the pillar 3 and the pillar trim 40 are connected by the pair of screws 54 penetrating the other sided holes of the connection members 56 being respectively coupled to the pillar 3 and the pillar trim 40. Here, the deviation-preventive hole 50 connects the pillar 3 and the pillar trim 40 over the fixing pin 44 fixing the pillar 3 and the pillar trim 40. In addition, the length of the strap 52 is formed longer than the distance between the pillar 3 and the pillar trim 40.

Also, the pillar-sided connection member 56 is supported by a supporting piece 43 formed integrally with the boss 42 and is coupled to the screw 3 by the screw 54 along with the supporting piece 43. The supporting piece 43 is constructed so that its connecting portion with the boss 42 is easily broken and thus the supporting piece 43 is separated from the boss 42 during the expansion of the bag 30.

By the construction described as above, the bag 30 is normally accommodated in the case 32 in a folded state within a space between the pillar 3 and the pillar trim 40, and the pillar trim 40 is fixed to the pillar 3 by the fixing pin 44 and the deviation-preventive hole 50. At this time, the strap 52 is maintained in a loosely extended state since the length of the strap 52 is longer than the interval between the pillar 3 and the pillar trim 40 (See FIG. 3).

If a broadside collision occurs, gas is supplied from the gas supply section 20 to the bag by a signal applied from the broadside collision sensor 10. Accordingly, as shown in FIG. 2, the bag 30 is expanded downwardly in a curtain shape. At this time, as shown in FIG. 4, the bag 30 is expanded with pushing away the lower portion of the pillar trim 40 outward (e.g., toward the interior), and most of cases, the fixing pin 44 fixing the pillar trim 40 to the pillar 3 is separated from the fixing hole of the pillar 3 by the expansive force of the bag 30, so that the pillar trim 40 is separated from the pillar 3. At this time, since the supporting piece 43 is fixed to the pillar together with the connection member 56, the supporting piece 43 is broken and separated from the boss 42 while the pillar trim 40 is separated from the pillar 3. However, since the pillar trim 40 and the pillar are connected by the deviation-preventive hole 50, the pillar trim 40 is separated from the pillar 3 but does not completely deviate from the pillar 3 in a state that the strap 52 is pulled.

As described above, in an automobile pillar air bag device according to the present invention, since the strap connecting the pillar trim and the pillar without any deviation is fixed to the pillar trim and the pillar by a screw that is a fixing element widely used, it becomes possible to obtain a pillar air bag device with superior assembling and manufacturing capabilities.

While the present invention has been described in detail, it should be understood that various changes, substitutions and alterations could be made hereto without departing from the spirit and scope of the invention as defined by the appended claims.

## Claims

1. An automobile pillar airbag device comprising:
a sensor installed in a chassis, for sensing a broadside collision;
a gas supply section installed in the chassis so as to inject a gas depending on a signal from the sensor;
a bag received extending from a front pillar of the chassis to a roof side rail, and expanded in a curtain shape in the downward direction of the roof side rail of the interior of the automobile by a gas supplied from the gas supply section;
a pillar trim provided in an inner side of the front pillar and covering the bag received in the front pillar; and
a pillar trim deviation preventive hole including a strap both ends of which are respectively connected with the front pillar and the pillar trim, and a screw for coupling the both ends of the strap to the front pillar and pillar trim respectively.

2. The automobile pillar airbag device according to claim 1, wherein the strap is installed so as to connect the front pillar and an upper portion of the pillar trim.

3. The automobile pillar airbag device according to claim 1 or 2, wherein the strap and the screws are connected by a connection member having a coupling hole through which the screw penetrates, and a fixing hole which an end of the strap is inserted and bound.

4. The automobile pillar airbag device according to claim 3, wherein the connection member arranged at the front pillar side of the strap is formed integrally with a fixing boss for the front pillar of the pillar trim and is coupled to a supporting piece broken and separated from the fixing boss when the bag is expanded.
